(19) Europäisches Patentamt
European Patent Office
Office européen des brevets

(11) EP 0 737 216 B1

(12) **EUROPEAN PATENT SPECIFICATION**

(45) Date of publication and mention of the grant of the patent:
**25.02.1998 Bulletin 1998/09**

(21) Application number: **95905348.9**

(22) Date of filing: **21.12.1994**

(51) Int Cl.[6]: **C08G 59/42**, C09D 163/00, C09D 173/02

(86) International application number:
**PCT/US94/14240**

(87) International publication number:
**WO 95/18166 (06.07.1995 Gazette 1995/29)**

(54) **MAR-RESISTANT COATING**

KRATZFESTES UEBERZUGSMITTEL

REVETEMENT RESISTANT AUX DETERIORATIONS

(84) Designated Contracting States:
**BE CH DE DK ES FR GB IT LI NL SE**

(30) Priority: **29.12.1993 US 174909**

(43) Date of publication of application:
**16.10.1996 Bulletin 1996/42**

(73) Proprietor: **E.I. DU PONT DE NEMOURS AND COMPANY**
**Wilmington Delaware 19898 (US)**

(72) Inventors:
- **BARSOTTI, Robert, J.**
  **Franklinville, NJ 08322 (US)**
- **NORDSTROM, J., David**
  **Huntington Woods, MI 48070 (US)**

(74) Representative: **Woodcraft, David Charles et al**
**BROOKES & MARTIN**
**High Holborn House**
**52/54 High Holborn**
**London, WC1V 6SE (GB)**

(56) References cited:

**EP-A- 0 053 280**
**EP-A- 0 257 512**
**EP-A- 0 257 513**
**EP-A- 0 275 138**
**FR-A- 2 268 041**
**US-A- 4 102 851**
**US-A- 4 754 015**

- **PATENT ABSTRACTS OF JAPAN vol. 7 no. 181 (C-180) ,10 August 1983 & JP,A,58 084820 (MITSUBISHI K.K.K.K) 21 May 1983,**
- **DATABASE WPI Section Ch, Week 8211 Derwent Publications Ltd., London, GB; Class A, AN 82-20932e & JP,A,57 023 295 (TORAY IND INC) , 6 February 1982**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 737 216 B1

Printed by Jouve, 75001 PARIS (FR)

## Description

### BACKGROUND OF THE INVENTION

The present invention relates to a curable coating composition particularly useful as a top coat in multi-layered coating systems.

Base coat-clear coat systems have found wide acceptance in the past decade as automotive finishes. Continuing effort has been directed to such coating systems to improve the overall appearance, the clarity of the top coat, and the resistance to deterioration. Further effort has been directed to the development of coating compositions having low volatile organic content (VOC).

Previous efforts at improving the etch resistance and durability of coatings had suggested the use of anhydride resins having pendant non-cyclic anhydride moieties in combination with resins that react with the polyanhydride resins to cure under curing conditions. See U.S. 5,428,082. However, a continuing need exists for coating formulations which provides outstanding performance characteristics after application, and particularly resistance to environmental etching.

Moreover, effort has previously been directed toward the development of mar-resistant clear coatings. While such coatings have previously been prepared, the mar-resistance was attained by softening the coating, which depreciates other performance characteristics.

### SUMMARY OF THE INVENTION

The present invention provides a sprayable coating composition which, through the selection of the chemical makeup and molecular weight of the components, provides a fully formulated coating composition which, at a low VOC, can be easily applied, and exhibits outstanding appearance and durability after application and ease of maintenance. In addition, the present coating, when applied to a substrate, exhibits excellent mar-resistance at high hardness, as well as the ability to "heal"·mars by heat and solvent treatment.

Specifically, the instant invention provides a curable coating composition comprising organic solvent and binder comprising

(a) at least 10%, on the basis of components (a) and (b), of an anhydride resin having a molecular weight of less than 2000 that contains (1) a central moiety, and (2) on average, at least three pendant, non-cyclic anhydride moieties bonded to each central moiety;

(b) at least 10%, on the basis of components (a) and (b), of a compound having at least two noncyclic acid anhydride groups and represented by the following formula

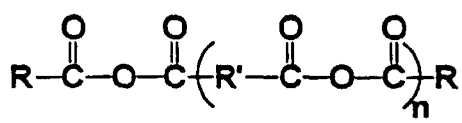

wherein R is a monovalent hydrocarbon group having 1 to 50 carbon atoms, R' is independently selected from a bivalent hydrocarbon groups having 2 to 50 carbon atoms, the hydrocarbon groups R and R' containing or not containing an ether linkage, urethane linkage or ester linkage, and n is an integer of 1 to 500.

(c) at least one organic component having at least 2 epoxy groups and;

(d) a functional amount of at least one catalyst, wherein the ratio of equivalents of epoxy to anhydride is about from 0.7 to 1.4.

This invention also concerns a composition as described above wherein the epoxy component is the diglycidyl ester of 1,2-cyclohexane dicarboxylic acid; and wherein R and R' in the linear anhydride (b) are both aliphatic moieties having up to 12 carbon atoms and n is an integer of 1-20; and wherein R in the linear anhydride has 8 carbon atoms and R' is a 50% molar blend of aliphatic hydrocarbon groups having four and seven carbon atoms, respectively, and n is 10; and a composition as above further comprising from 1 to 200 parts by weight, per 100 parts of components (a) and (b), of pigment; and such composition applied to a substrate.

### DETAILED DESCRIPTION OF THE INVENTION

A first class of anhydride resin which can be used in the present invention includes those having a molecular weight

of less than 2000 having a central moiety and, on average, at least three pendant, non-cyclic anhydride moiety bonded to each central moiety. This anhydride resin, having pendant, non-cyclic anhydride moiety should comprise at least 10% of the mixture of this anhydride and the linear anhydride. This first anhydride is asymmetrical, and preferably contains a moiety represented by the following formula:

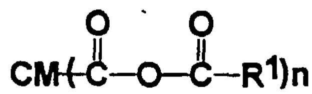

wherein (CM) is a central moiety, ($R^1$) is an organic moiety, and n is a number of pendant anhydride groups that averages at least 3.

The central moiety can be a simple organic moiety, such as an aliphatic, cycloaliphatic or aromatic moiety, with a plurality of anhydride groups bonded to it. Alternatively, it can contain a plurality of repeating units which are bonded to one or more pendant anhydride groups. Examples of suitable non-polymeric central moieties are those derived from multifunctional alcohols such as pentaerythritol, trimethylolpropane and the dimer of trimethylolpropane. The multifunctional alcohols are reacted with cyclic, monomeric anhydride such as methyl hexahydrophthlic anhydride to give a multifunctional acid containing moiety. The resulting product is then reacted with ketene to form the linear pendant anhydride.

The central moiety is linked to at least about 3 non-cyclic anhydride groups on average. The anhydride equivalent weight (formula weight per anhydride group) is preferably at least about 200 and preferably no more than about 1000.

Each anhydride moiety is typically terminated by an organic group ($R^1$). This group is preferably aliphatic and more preferably alkyl. It preferably contains no more than about 6 carbon atoms, more preferably no more than about 4 carbon atoms, and most preferably methyl.

The oligomeric anhydride can optionally contain a polyvalent organic moiety (A) that is linked to a plurality of anhydride groups by a plurality of pendant linking groups (LG), as illustrated in the following formula:

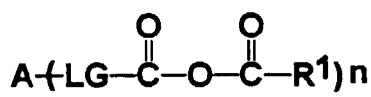

The linking group (LG) can contain, for example, ester linkages, alkylene groups, ether linkages, urethane linkages and combinations of those. The polyvalent organic group can contain, for example, a polyvalent alkyl or aromatic group. The combination of the polyvalent organic moiety (A) and the linking groups (LG) forms the central moiety (CM) as previously described.

The central moiety can optionally contain other functional groups in addition to the pendant non-cyclic anhydride groups. For example, the central moiety may contain pendant acid groups, so that the anhydride is represented by the formula:

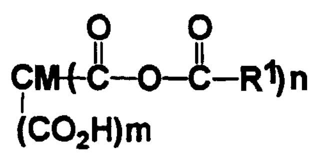

wherein m is the number of pendant acid groups and all other characters have the meaning previously given. The molar ratio of pendant non-cyclic anhydride groups to pendant acid groups in the oligomeric anhydride is preferably at least about 25:75, more preferably at least about 50:50, and more highly preferably at least about 75:25. Most preferably, the anhydride contains substantially no pendant acid groups. The central moiety can also contain minor quantities of cyclic anhydride moieties.

The molecular weight of the anhydride resin is an important feature of the present invention, and should be less than 2000. At molecular weights of the oligomeric anhydride greater than 2000, it is difficult to attain a sprayable composition with a volatile organic content of less than about 3.8 pounds (1.72 kg) of organic solvent per gallon (3.79 l) of curable compositions. The molecular weight of the anhydride resin is preferably about from 400 to 1,000, and the anhydride resin preferably has 3 to 4 pendant, non-cyclic anhydride moieties bonded to each central moiety.

The compositions of the present invention further comprise at least about 10%, on the basis of claimed components

(a) and (b), of at least one linear anhydride oligomer.

Such linear anhydrides which can be used in the present invention are compounds having at least two non-cyclic acid anhydride groups and represented by the following formula

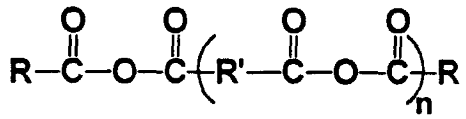

(1)

wherein R is a monovalent hydrocarbon group having 2 to 50 carbon atoms, R' is a bivalent hydrocarbon group having 2 to 50 carbon atoms, the hydrocarbon groups R and R' containing or not containing an ether linkage, urethane linkage or ester linkage, and n is an integar of 1 to 500.

The above compounds can be prepared, for example, by reacting a monocarboxylic acid having one carboxyl group in the molecule with a dicarboxylic acid having two carboxyl groups in the molecule for dehydration.

Examples of monocarboxylic acids which can be used are benzoic acid, methylbenzoic acid and p-tert-butylbenzoic acid as aromatic monocarboxylic acids; formic acid, acetic acid, propionic acid, butyric acid, caproic acid, caprylic acid, pelargonic acid, isononanoic acid, capric acid, undecanoic acid, lauric acid, myristic acid, palmitic acid, stearic acid, cyclohexanecarboxylic acid, 9-decanoic acid, oleic acid, eleostearic acid, elaidic acid, brassidic acid, linoleic acid and linolenic acid as saturated or unsaturated aliphatic monocarboxylic acids, or alicylic monocarboxylic acids. Also usable as monocarboxylic acids are coconut oil fatty acid, soybean oil fatty acid, castor oil fatty acid, dehydrated castor oil fatty acid, linseed oil fatty acid and safflower oil fatty acid. These examples can be used singly or in combination.

Examples of dicarboxylic acids which can be used are terephthalic acid, isophthalic acid, phthalic acid, naphthalenedicarboxylic acid, 4,4' -biphenyldicarboxylic acid and diphenylmethane-4,4'-dicarboxylic acid as aromatic dicarboxylic acids; hexahydrophthalic acid as alicyclic dicarboxylic acid; adipic acid, sebacic acid, suberic acid, succinic acid, glutaric acid, maleic acid, chloromaleic acid, fumaric acid, dodecanoic diacid, pimelic acid, azelaic acid, itaconic acid, citraconic acid and dimer acid as aliphatic dicarboxylic acids. One of these acids is usable, or at least two of them can be used in combination.

Among these dicarboxylic acids, those wherein the carboxylic groups are attached to adjacent carbon atoms readily undergo a self-cyclization reaction and encounter difficulty in giving the desired crosslinking agent, so that it is desirable not to use them singly. Such dicarboxylic acids are phthalic acid, hexahydrophtalic acid, tetrahydrophthalic acid, succinic acid, maleic acid, chloromaleic acid, etc.

The dehydration reaction between the two components can be conducted at about 80 to about 200°C. To promote this reaction, it is desirable to use a dehydrating agent such as acetic anhydride, acetic acid chloride or phosphorus pentoxide. Although not limited specifically, the amount of the agent to be used is preferably about 2 to about 200 parts by weight per 100 parts by weight of the combined amount of the two components calculated as solids. The reaction ratio of the two components is variable within a range permitting no free carboxyl group to remain in the product as represented by the formula (I). Stated specifically, it is desirable to use about 0.5 to about 250 moles of the dicarboxylic acid per mole of the monocarboxylic acid.

Further, some or all of the carboxylic groups of the two components may be converted, for example, to an acid chloride, alkali metal salt or amine salt (primary, secondary, tertiary or quaternary), followed by a desalting reaction to from acid anhydride groups.

With reference to the formula (I), R and R' are each hydrocarbon groups which R has 1 to 50 carbon atoms and R' has 2 to 50 carbon atoms and which may contain an ether linkage, urethane linkage or ester linkage. The hydrocarbon group is introduced into the compound (I) by using the monocarboxylic acid and dicarboxylic acid.

An ether linkage can be introduced into R', for example, by converting the hydroxyl groups at the respective ends of a dihydric alcohol as (poly) etherified to carboxyl groups as by oxidation to obtain a dicarboxylic acid polyether having one carboxyl group at each end, and substituting the polyether for a portion or the whole of the dicarboxylic acid or a modified product thereof. On the other hand, an ether linkage is introduced into R, for example, by converting only one hydroxyl group of the (poly) etherified dihydric alcohol to a carboxyl group, with a monohydric alcohol etherified with the other hydroxyl group, to obtain a monocarboxylic acid containing an ether linkage, substituting this acid for a portion or the whole of the monocarboxylic acid to be used and conducting the same reaction as described above. The presence of the ether linkage results in the advantage that the product obtained on curing can be given high resistance to chemicals.

The dihydric alcohol to be (poly)etherified is a compound having two hydroxyl groups in the molecule. Examples of such alcohols are ethylene glycol, propylene glycol, diethylene glycol, trimethylene glycol, tetraethylene glycol, trimethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4, 3-pentanediol, 3-methyl-4, 5-pentanediol, 2,2,4-trimethyl-1, 3-pentanediol, 1,6-hexanediol, 1,5-hexanediol, 1,4-hexanediol, 2,5-hexanediol, 1,4-cyclohexanedimethanol, neopentyl glycol and bisphenol A. One of these alcohols is usable, or at least two of them can be used in combination.

The polyetherified product can be obtained by subjecting the dihydric alcohol and an alkylene oxide, such as ethylene oxide, propylene oxide or butylene oxide, to an addition reaction.

The monohydric alcohol to be used for forming the group R containing an ether linkage is a compound having one hydroxyl group in the molecule. Examples of such compounds are mthyl alcohol, ethyl alcohol, propyl alcohol, butyl alcohol, ethyl butanol, benzl alcohol, lauryl alcohol, stearyl alcohol, ethylene glycol monomethyl ehter, ethylene glycol monoehtyl ether, diethylene glycol monomethyl ether, diethylene glycol monethyl ether and diethylene glycol monobutyl ether. These compounds can be used singly, or in combination.

To introduce a urethane linkage into the group R or R' of the formula (I), a polyurethane having an isocyanate group at leach of opposite ends is used which is obtained by subjecting a diisocyanate compound and a dihydric alcohol to a urethanization reaction. More specifically, a urethane linkage can be introduced into the group R' by reacting a compound having aboth hydroxyl and carboxyl in the molecule with the two isocyanate groups of the polyurethane for urethanization to introduce a carboxyl group into each end, and substituting the resulting compound for a portion or the whole of the dicarboxylic acid. Further a urethane linkage can be introduced into the group R by adding monohydric alcohol to one of the isocyanate groups of the polyurethane, adding a compound having both hydroxyl and carboxyl in the molecule to the other isocyanate group by a urethanization reaction to obtain a monocarboxylic acid, and substituting the acid for a portion or the whole of the monocarboxylic acid stated previously. The presence of the urethane linkage results in the advantage that the product obtained on curing has high hardness, elasticity and high resistance to water and to chemicals. The diisocyanate compound mentioned above is a compound having two isocyanate groups in the molecule. Exemplary of such compounds are hexamethylene diisocyanate and trimethylhexamethylene diisocyanate as aliphatic compounds, hydrogenated xylylene diisocyanate, isophorone diisocyanate and cyclohexane diisocyanate as alicyclic compounds, tolylene diisocyanate and diphenylmethane diisocyanate as aromatic compounds. Examples of compounds having both hydroxyl and carboxyl are lactic acid, p-hydroxybenzoic acid, dimethylolpropionic acid, hydroxpivalic acid, ricinoleic acid and 12-hydroxystearic acid. Examples of dihydric alcohols and monohydric alcohols usable are those already mentioned.

An ester linkage can be readily introduced into the group R or R' of the formula (I), for example, by subjecting a monocarboxylic acid having one carboxylic group in the molecule and a low-molecular-weight polyester having two carboxyl groups in the molecule to a dehydration reaction. The presence of an ester linkage entails the advantage of giving a noncrystalline compound which is highly compatible with other resins, permitting the resulting composition to form cured coatings of remarkably improved flexibility and elongation.

Examples of monocarboxylic acids useful for the reaction are aliphatic monocarboxylic acids, alicyclic monocarboxylic acids, coconut oil fatty acid, etc. previously mentioned. Also usable are adducts of a monohydric alcohol with a cyclic acid anhydride. Among these, benzoic acid, isononanoic acid and coconut oil fatty acid are desirable to use.

The low-molecular-weight polyester (up to about 2000, preferably 150 to 1000, in number average molecular weight) having two carboxyl groups in the molecule can be easily prepared, for example, from a dicarboxylic acid and a glycol. Preferred polyesters are those having carboxyl groups and an ester linkage in the molecule and free from other functional groups and linkages.

The dicarboxylic acid to be used in this case is a compound having two carboxyl groups in the molecule or an acid anhydride thereof. Examples of such acids include those previously mentioned, i.e., aromatic dicarboxylic acids or acid anhydrides thereof; alicyclic dicarboxylic acids or acid anhydrides thereof; and aliphatic dicarboxylic acids or acid anhydrides thereof. Among these, preferable to use is one selected from among phthalic anhydride, methyl hexahydrophthalicanhydride, adipic acid, succinic acid and sebacic acid.

The glycol to be used in this case is a compound having two hydroxyl groups in the molecule. Examples of such compounds are the dihydric alcohols previously mentioned. Among these, preferable to use is one selected from among neopentyl glycol, 1,6-hexanediol and 1,4-butanediol.

The esterification reaction between the dicarboxylic acid and the glycol can be carried out by a known process. The reaction ratio of the two components is variable within such a range that the resulting polyester has two carboxyl groups in total at the respective ends of side chains. More specifically, it is suitable to use about 1.2 to about 2 moles of dicarboxylic acid per mole of glycol.

Instead of using the dicarboxylic acid and the glycol for preparing the low-moleculer-weight polyester, it is also possible to use a lactone, such as ε-caprolactone, and the above-mentioned compound having both hydroxyl and carboxyl.

The formula (I) wherein an ester linkage is introduced into R or R' is prepared by subjecting the monocarboxylic acid stated above and the polyester having two carboxyl groups in the molecule to a dehydration reaction. This dehydration reaction can be conducted at about 80 to about 300°C. To promote this reaction, it is desirable to use a dehydrating agent such as acetic anhydride, acetic acid chloride or phosphorus pentoxide. The amount of the agent to be

used, although not limited specifically, is preferably about 2 to about 200 parts by weight per 100 parts by weight of the combined amount of the two components calculated as solids. The reaction ration between the two components is in such a range that no free carboxyl group remains in the resulting product as shown in the formula (I). More specifically, it is desired to use about 0.5 to about 250 moles of the polyester having two carboxyl groups per mole of the monocarboxylic acid. Also in this case, some or all of the carboxyl groups of the two components may be converted, for example, to an acid chloride, alkali metal salt or amine salt (primary, secondary, tertiary or quaternary), followed by a desalting reaction to prepare acid anhydride groups.

The linear anhydride has noncyclic acid anhydride groups and a number average molecular weight which is preferably about 100 to about 50,000, more preferably in the range of 500 to 10,000, altough not limited specifically. the number of acid anydride groups in the molecule is at least two, more preferably about 2 to about 50, to be suitable.

The present coating composition further comprise an organic component having at least two epoxy groups. In this context a wide variety of materials can be used. Typical of such epoxy components are sorbitol polyglycidyl ether, mannitol polyglycidyl ether, pentaerythritol polyglycidol ether, glycerol polyglycidyl ether, low molecular weight epoxy resins such as epoxy resins of epichlorohydrin and bisphenol A., di- and polyglycidyl esters of acids, polyglycidyl ethers of isocyanurates, such as "Denecol" EX301 from Nagase. Sorbitol polyglycidyl ether, such as DCE-358® from Dixie Chemical, and di- and polyglycidyl esters of acids, such as Araldite CY-184® from Ciba-Geigy or XU71950 from Dow, are preferred since they form high quality finishes. Polymeric epoxy resins can also be used, such as those containing glycidyl methacrylate or glycidyl acrylate. The epoxy resin can further comprise copolymerized monomers of alkyl methacrylates, or alkyl acrylates or mixtures thereof, where the alkyl groups have 1-12 carton atoms. Optionally, the acrylic polymer can contain other components such as styrene, alphamethyl styrene, acrylonitrile, methacrylonitrile in amounts of about 0.1-50% by weight.

The quantities of the anhydride components as well as the epoxy components should be such that the ratio of equivalents of epoxy to anhydride is from 0.7 to 1.4.

The present coating composition further comprises a functional amount of catalyst. A wide variety of catalysts can be used, including both active and latent catalysts. A latent catalyst is understood to mean a catalyst which has little or no effect on the ingredients with which it is blended at ambient or storage conditions, but which promotes the reaction of these components at elevated temperatures or when applied to a substrate. While a wide variety of such catalysts can be used, as will be evident to those skilled in the art, those found to be particularly satisfactory in the present invention include onium compounds such as those selected from the group consisting of quaternary phosphonium compounds, quaternary ammonium compounds and tertiary amines blocked with acids such as sulfonic acid and phosphoric acid. Catalysts which have been found particularly satisfactory include quaternary phosphonium salts such as tetrabutylphosphonium chloride or quaternary ammonium salts such as tetrabutylammonium halide, especially chloride.

Active catalysts which can be used in the present invention include tertiary amines catalysts of the type previously used in coating formulation, such as triethylenediamine or Bis(2-dimethylaminoethyl)ether.

A functional amount of catalyst is used in the present formulations, which will vary widely, depending on the specific anhydride resins and epoxy resins selected, as well as their molecular weight and relative proportions. While the specific concentration of catalysts will be selected in view of these variables, as will be evident to those skilled in the art, the quantities will generally be about from 0.1 to 5 wt %, based on the weight of the solids in the formulation.

The coating compositions of the present invention are formulated into high solids coating systems dissolved in at least one solvent. The solvent is organic. Preferred solvents include aromatic hydrocarbons such as petroleum naphtha or xylenes; ketones such as methyl amyl ketone, methyl isobutyl ketone, methyl ethyl ketone or acetone; esters such as butyl acetate or hexyl acetate; and glycol ether esters such as propylene glycol monomethyl ether acetate.

The coating compositions of the present invention can also contain conventional additives such as pigments, stabilizers, rheology control agents, flow agents, toughening agents and fillers. Such additional additives will, of course, depend on the intended use of the coating composition. Fillers, pigments, and other additives that would adversely effect the clarity of the cured coating will not be included if the composition is intended as a clear coating.

The coating compositions are typically applied to a substrate by conventional techniques such as spraying, electrostatic spraying, roller coating, dipping or brushing. The present formulations are particularly useful as a clear coating for outdoor articles, such as automobile and other vehicle body parts. The substrate is generally prepared with a primer and or a color coat or other surface preparation prior to coating with the present compositions.

After application to a substrate, the present compositions are cured by heating to a temperature of about from 120 to 140° C for a period of about from 15 to 90 minutes.

The performance characteristics of the final cured coating composition are excellent, providing a combination of excellent gloss and durability to abrasion, sunlight and acidic rain. The cured coating compositions exhibit an excellent balance of hardness and mar-resistance. The coatings also exhibit the ability to "heal" mars by heat and solvent wiping. At the same time, the compositions provide ease of handling and low volatile organic content.

The present invention is further illustrated by the following specific examples, in which parts and percentages are

by weight unless otherwise indicated.

EXAMPLE 1

A curable coating composition was prepared from an anhydride resin having pendant, non-cyclic anhydride moieties, a linear anhydride , co-reactant epoxy and catalyst.

(a) Anhydride Resin With Pendant Groups

The anhydride resin was prepared from a tetra-functional half-acid ester. The following constituents were charged to a reaction vessel equipped with a heating mantle, reflux condenser, thermometer, nitrogen inlet, and stirrer:

| Portion 1 | Parts by Weight |
|---|---|
| Pentaerythritol | 478.0 |
| Methyl hexahydrophthalic anhydride | 2250.0 |
| Triethylamine | 0.5 |

| Portion 2 | Parts by Weight |
|---|---|
| Xylol (135-145C) | 2250.0 |
| Total | 4978.5 |

Portion 1 was charged into the reaction vessel, heated to 180° C under a nitrogen blanket and held for 30 minutes. After the hold period, the reaction mixture was cooled and Portion 2 added.

The solution prepared above was used to make a linear pendant anhydride. The solution was charged into a 5L flask equipped with a stirrer and a gas inlet tube. the gas inlet tube was attached to a ketene generator similar to the one described by Williams et al. in the Journal of Organic Chemistry 5,122, 1940. Ketene is bubbled through the solution until all of the acid groups have been converted to anhydride groups. Reaction progress was monitored via FTIR. Solvent was then removed under vacuum to give a linear pendant anhydride with the following characteristics:

% weight solids: 78.0
Anhydride eq. wt: 329 +/-4 (on solution basis)
Acid eq. wt: 6176 +/- 1323 (on solution basis)

(b) Linear Anhydride

A crosslinking agent was prepared by mixing together 5 moles of adipic acid, 5 moles of azeleic acid, 2 moles of isononanoic acid, and 24 moles of acetic anhydride, reacting the monomers at 140° C while removing acetic acid as a by-product, heating the mixture to 160° C when acetic acid ceased flowing out and removing an excess of acetic anhydride to terminate the reaction. The resulting linear anhydride was dissolved in propylene glycol monomethyl ether acetate at a concentration of 80% by weight.

A coating formulation was prepared by first combining 76.31 parts of linear pendant anhydride (a) and 124.1 parts of linear anhydride (b). Catalyst was added to the anhydride blend as 5.99 parts of a 25% solution of tetrabutylphosphoniumchloride in PM acetate; and 18.77 parts of a 25% solution of tertiary amine catalysts commercially available from Union Carbide as NIAX A-99 methyl ethyl ketone. In addition, 20.5 parts of a 5% solution in PM acetate of silicone flow additive commercially available from BYK Chemie as BYK 301, 6.06 parts of Tinuvin 384 UV screener from Ciba Giegy and 4.54 parts of Tinuvin 292 hindered amine light stabilizer from Ciba were added to the formulation. This formulation was combined with 143.7 parts of Diglycidyl ester commercially available from Dow as XU-71950.

This clear coating formulation was reduced to a viscosity of Fisher #2 of 48 seconds with butyl acetate. It was sprayed over a waterborne basecoat which had received a warm air flash to remove water. The system was baked for 30 minutes at 265°F (130°C). The resulting finish had excellent appearance and cure. The balance of hardness and mar resistance was excellent, as was the solvent resistance. Resistance to acid etching was also good. The VOC of this clear less than or equal to 2.8 lbs/gal (0.336 kg/l).

## Claims

1. A curable coating composition comprising organic solvent and binder comprising

   (a) at least 10%, on the basis of components (a) and (b), of an anhydride resin having a weight average molecular weight of less than 2000 that contains (1) a central moiety, and (2) on average, at least three pendant, non-cyclic anhydride moieties bonded to each central moiety;
   (b) at least 10%, on the basis of components (a) and (b), of a compound having at least two non-cyclic acid anhydride groups and represented by the following formula

   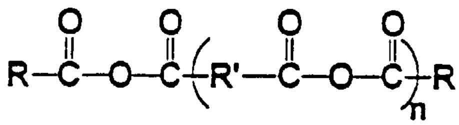

   wherein R is a monovalent hydrocarbon group having 1 to 50 carbon atoms, R' is independently selected from bivalent hydrocarbon groups having 2 to 50 carbon atoms, the hydrocarbon groups R and R' containing or not containing an ether linkage, urethane linkage or ester linkage, and n is an integer of 1 to 500;
   (c) at least one organic component having at least two epoxy groups and;
   (d) a functional amount of at least one catalyst, wherein the ratio of equivalents of epoxy to anhydride is from 0.7 to 1.4.

2. A composition of Claim 1 wherein the anhydride resin has from 3 to 4 pendant, non-cyclic anhydride moieties bonded to each central moiety.

3. A composition of Claim 2 wherein the anhydride resin consists essentially of the reaction product of ketene with the reaction product of pentaerythritol, and methyl hexahydrophthalic anhydride.

4. A composition of Claim 1 wherein the catalyst is selected from at least one compound of the group consisting of quaternary phosphonium compounds, quaternary ammonium compounds and tertiary amines.

5. A composition of Claim 1 wherein organic component (c) is a polymeric epoxy resin which comprises copolymerized units of glycidyl methacrylate or glycidyl acrylate.

6. A composition of Claim 1 wherein the epoxy component is the diglycidyl ester of 1,2-cyclohexane dicarboxylic acid.

7. A composition of Claim 1 wherein R and R' in the linear anhydride (b) are both aliphatic moieties having up to 12 carbon atoms and n is an integer of 1 - 20.

8. A composition of Claim 7 wherein R in the linear anhydride has 8 carbon atoms and R' is a 50% molar blend of aliphatic hydrocarbon groups having four and seven carbon atoms, respectively, and n is 10.

9. A curable coating composition of Claim 1 further comprising from 1 to 200 parts by weight, per 100 parts of components (a) and (b), of pigment.

10. A curable coating composition of Claim 1 applied to a substrate.

## Patentansprüche

1. Härtbare Beschichtungszusammensetzung, umfassend organisches Lösungsmittel und Bindemittel, umfassend

   (a) wenigstens 10 %, bezogen auf die Komponenten (a) und (b), eines Anhydridharzes mit einem Gewichtsmittelmolekulargewicht von weniger als 2000, das (1) eine zentrale Gruppierung und (2) im Durchschnitt wenigstens drei angehängte nichtcyclische Anhydridgruppierungen, die an jede zentrale Gruppierung gebunden sind, enthält;
   (b) wenigstens 10 %, bezogen auf die Komponenten (a) und (b), einer Verbindung mit wenigstens zwei nichtcyclische Säureanhydridgruppen, die durch die folgende Formel dargestellt sind

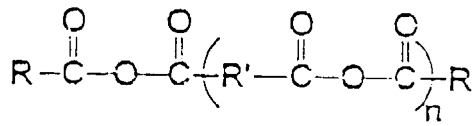

worin R für eine einwertige Kohlenwasserstoffgruppe mit 1 bis 50 Kohlenstoffatomen steht, R' unabhängig ausgewählt ist aus zweiwertigen Kohlenwasserstoffgruppen mit 2 bis 50 Kohlenstoffatomen, wobei die Kohlenwasserstoffgruppen R und R' eine Etherbindung, Urethanbindung oder Esterbindung enthalten oder nicht und n für eine ganze Zahl von 1 bis 500 steht;
(c) wenigstens eine organische Komponente mit wenigstens zwei Epoxygruppen; und
(d) eine funktionelle Menge wenigstens eines Katalysators, wobei das Verhältnis von Epoxy- zu Anhydridäquivalenten 0,7 bis 1,4 beträgt.

**2.** Zusammensetzung nach Anspruch 1, in der das Anhydridharz 3 bis 4 angehängte nichtcyclische Anhydridgruppierungen, die an jede zentrale Gruppierung gebunden sind, aufweist.

**3.** Zusammensetzung nach Anspruch 2, in der das Anhydridharz im wesentlichen aus dem Reaktionsprodukt von Keten mit dem Reaktionsprodukt von Pentaerythrit und Methylhexahydrophthalsäureanhydrid besteht.

**4.** Zusammensetzung nach Anspruch 1, in der der Katalysator ausgewählt ist aus wenigstens einer Verbindung der Gruppe, bestehend aus quaternären Phosphoniumverbindungen, quaternären Ammoniumverbindungen, und tertiären Aminen.

**5.** Zusammensetzung nach Anspruch 1, in der die organische Komponente (c) ein polymeres Epoxyharz ist, das copolymerisierte Einheiten von Glycidylmethacrylat oder Glycidylacrylat umfaßt.

**6.** Zusammensetzung nach Anspruch 1, in der die Epoxykomponente der Diglycidylester von 1,2-Cyclohexandicarbonsäure ist.

**7.** Zusammensetzung nach Anspruch 1, in der R und R' in dem linearen Anhydrid (b) beides aliphatische Gruppierungen mit bis zu 12 Kohlenstoffatomen sind und n für eine ganze Zahl von 1 bis 20 steht.

**8.** Zusammensetzung nach Anspruch 7, in der R in dem linearen Anhydrid 8 Kohlenstoffatome aufweist und R' eine 50%ige molare Mischung von aliphatischen Kohlenwasserstoffgruppen mit vier bzw. sieben Kohlenstoffatomen ist und n 10 bedeutet.

**9.** Härtbare Beschichtungszusammensetzung nach Anspruch 1, die außerdem auf 100 Teile der Komponenten (a) und (b) 1 bis 200 Gewichtsteile Pigment umfaßt.

**10.** Härtbare Beschichtungszusammensetzung nach Anspruch 1, die auf ein Substrat aufgebracht ist.

## Revendications

**1.** Composition de revêtement durcissable comprenant un solvant organique et un liant, comprenant

(a) au moins 10 %, sur la base des constituants (a) et (b), d'une résine d'anhydride ayant un poids moléculaire moyen en poids inférieur à 2000, qui contient (1) une partie centrale et (2), en moyenne, au moins trois parties anhydrides non cycliques pendantes liées à chaque partie centrale ;
(b) au moins 10 %, sur la base des constituants (a) et (b), d'un composé ayant au moins deux groupes anhydrides d'acide non cycliques et représentés par la formule suivante :

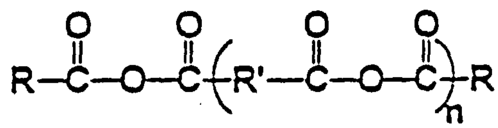

dans laquelle R est un groupe hydrocarboné monovalent ayant 1 à 50 atomes de carbone, R' est indépendamment choisi parmi les groupes hydrocarbonés bivalents ayant 2 à 50 atomes de carbone, les groupes hydrocarbonés R et R' contenant ou non une liaison éther, une liaison uréthane ou une liaison ester, et n est un nombre entier de 1 à 500 ;

(c) au moins un constituant organique ayant au moins deux groupes époxy et ;

(d) une quantité fonctionnelle d'au moins un catalyseur, dans laquelle le rapport des équivalents d'époxy et d'anhydride est de 0,7 à 1,4.

**2.** Composition selon la revendication 1, dans laquelle la résine d'anhydride a de 3 à 4 parties anhydrides non cycliques pendantes liées à chaque partie centrale.

**3.** Composition selon la revendication 2, dans laquelle la résine d'anhydride est essentiellement constituée par le produit de réaction d'un cétène avec le produit de réaction de pentaérythritol et d'anhydride méthylhexahydrophtalique.

**4.** Composition selon la revendication 1, dans laquelle le catalyseur est choisi parmi au moins un composé du groupe constitué par les composés de phosphonium quaternaire, les composés d'ammonium quaternaire et les amines tertiaires.

**5.** Composition selon la revendication 1, dans laquelle le constituant organique (c) est une résine époxy polymère qui comprend des unités de méthacrylate de glycidyle ou d'acrylate de glycidyle copolymérisées.

**6.** Composition selon la revendication 1, dans laquelle le constituant époxy est l'ester diglycidylique de l'acide 1,2-cyclohexanedicarboxylique.

**7.** Composition selon la revendication 1, dans laquelle R et R' dans l'anhydride linéaire (b) sont tous les deux des parties aliphatiques ayant jusqu'à 12 atomes de carbone et n est un nombre entier de 1 à 20.

**8.** Composition selon la revendication 7, dans laquelle R dans l'anhydride linéaire a 8 atomes de carbone et R' est un mélange 50 % molaire de groupes hydrocarbonés aliphatiques ayant quatre et sept atomes de carbone, respectivement, et n est 10.

**9.** Composition de revêtement durcissable selon la revendication 1, comprenant en outre de 1 à 200 parties en poids, pour 100 parties de constituants (a) et (b), de pigment.

**10.** Composition de revêtement durcissable selon la revendication 1, appliquée sur un substrat.